# EUROPÄISCHE PATENTSCHRIFT

(11) **EP 2 048 769 B1**
(45) Veröffentlichungstag und Bekanntmachung des Hinweises auf die Patenterteilung: **07.04.2010**
(21) Anmeldenummer: 09151306.9
(22) Anmeldetag: 13.08.2004
(51) Int. Cl.: H02K 15/16

(54) **Reluktanzmotor**
Reluctance motor
Moteur à réluctance

(30) Priorität: 18.08.2003 DE 10337939
(43) Veröffentlichungstag der Anmeldung: 15.04.2009
(62) Teilanmeldung aus: 04766491.7
(73) Patentinhaber: Vorwerk & Co. Interholding GmbH, 42275 Wuppertal (DE)
(72) Erfinder: Caldewey, Uwe, 44229, Dortmund (DE); Lienenlüke, Paul, 45549, Sprockhövel (DE); Theuermann, Volker, 58455, Witten (DE)
(74) Vertreter: Müller, Enno

(56) Entgegenhaltungen:
- EP-A- 0 836 087
- EP-A- 1 079 222
- US-A- 5 780 945

## Beschreibung

Die Erfindung betrifft einen Reluktanzmotor mit einem Rotor und einem Stator, wobei der Rotor Rotorsegmente aufweist, die in freistehenden Bereichen im Wesentlichen rechteckig geformt sind mit einer stirnseitigen kreisabschnittförmigen Gestaltung.

Reluktanzmotoren der in Rede stehenden Art sind bekannt. So wird bspw. auf die DE 100 35 540 A1 verwiesen. Dort ist ein Reluktanzmotor dargestellt und beschrieben, dessen Rotor mit vier winkelmäßig gleichmäßig verteilt angeordneten Rotorsegmenten versehen ist. Diese Rotorsegmente ragen, bezogen auf die Rotordrehachse, radial nach außen ab und weisen einen im Wesentlichen rechteckigen Grundriss auf, wobei die radial nach außen weisende Stirnseite im Grundriss kreisabschnittförmig gestaltet ist.

Aus der US 6,520,012 B1 ist es für Rotoren elektrischer Maschinen bekannt, stirnseitig von Rotorsegmenten Material abzutragen. Für Reluktanzmotoren ist aus der US 5,780,945 A1 bekannt, von Zusatzscheiben radial außenseitig Material abzutragen oder mittels Auswuchtelementen Material in dem Bereich zwischen zwei aufeinander folgenden Rotorpolen hinzuzufügen.

Ausgehend von dem genannten Stand der Technik beschäftigt sich die Erfindung mit der Aufgabe, einen in vorteilhafter Weise ausgewuchteten Reluktanzmotor anzugeben.

Diese Aufgabe ist beim Gegenstand des Anspruches 1 gelöst, wobei darauf abgestellt ist, dass selektiv auf einer oder mehreren Flachseiten der Rotorsegmente zum Wuchten des Rotors Material entfernt ist, ggf. in unterschiedlichem Ausmaß. Hierdurch ist ein Wuchten auf einem relativ großen Außendurchmesser erreicht, wobei nur eine geringe Materialentnahme erforderlich ist. Je nach Gegebenheit können auf einer Flachseite eines Rotorsegments auch mehrere, ggf. unterschiedlich große Ausnehmungen vorgesehen werden. Als besonders vorteilhaft erweist es sich diesbezüglich, dass eine Materialentfernung durch Ausfräsung erreicht ist.

Es wird auch vorgeschlagen, dass der Rotor aus einer Vielzahl von dünnen Blechen, die axial übereinander angeordnet sind, zusammengesetzt ist. So können gestanzte Bleche zum Einsatz kommen, welche axial übereinander angeordnet eine variable Rotorhöhe erlauben. Durch Anordnung mehr oder weniger Rotorbleche ist das Rotorpaket in Rotorachsrichtung variabel gestaltbar, was insbesondere die Herstellung des Rotors erleichtert. Um das durch die Bleche geschaffene Rotorpaket zu festigen, ist vorgesehen, dass die Bleche miteinander verklebt sind. Bevorzugt wird diesbezüglich, dass die Verklebung aufgrund einer Backlackbeschichtung der Bleche erreicht ist. Durch den Einsatz derartiger Backlackbleche und entsprechender thermischer Behandlung ist eine weitere Verbesserung der Stabilität des Rotors erreicht. Unter Backlackblechen versteht man Bleche, welche gegebenenfalls zusätzlich zu einer beidseitigen Isolierschicht noch eine Backlackschicht aufweist. Diese Backlackschicht geht bei Temperaturerhöhung (Backen) in einen Klebezustand über. Durch diese Verklebung wird eine Verbindung der Einzelrotorbleche zu einem Gesamtrotorpaket erreicht, was sich hinsichtlich der Auswuchtung und der Stabilität als vorteilhaft erweist. Auch ein Verdrehen der Einzelbleche zueinander wird durch die Verklebung verhindert.

Der Rotor kann weiter eine Geberscheibe aufweisen. Eine solche drehfest mit dem Rotor verbundene Geberscheibe dient zur Ermittlung der Rotorstellung, so insbesondere in Zusammenwirkung mit einer ortsfesten, durch die Geberscheibe beeinflussten Lichtschranke oder dergleichen. Um einen Reluktanzmotor der in Rede stehenden Art insbesondere hinsichtlich der Ausgestaltung der Geberscheibe weiter zu verbessern, wird vorgeschlagen, dass jedem Rotorsegment eine Geberausformung zugeordnet ist, wobei jedoch jedenfalls eine Axialflanke einer Geberausformung bezüglich einer Flachseite des zugeordneten Rotorsegments einen Umfangsversatz von 7,5° aufweist. Zufolge dieser erfindungsgemäßen Ausgestaltung ist der Betrieb bei vierphasigen Reluktanzmotoren sowohl bei Rechts- als auch bei Linkslauf desselben gewährleistet. Darüber hinaus ist erfindungsgemäß die Geberscheibe symmetrisch ausgestaltet, so dass die Breite einer Geberausformung der Spaltbreite zwischen zwei Geberausformungen entspricht. Demzufolge ergeben sich symmetrische Gebersignale, wobei bevorzugt pro Umdrehung bei zwei vorgesehenen, zu durchfahrenden Gabellichtschranken 24 Impulse erzeugt werden. Hieraus resultieren bei einem 8/6-Reluktanzmotor, d. h. einem Reluktanzmotor mit einem sechs Rotorsegmente aufweisenden Rotor und einem acht Spulen aufweisenden Stator vier eindeutige Positionsinformationen zur Ansteuerung der vier Phasen des Stators. So ist weiter vorgesehen, dass ein Rotorsegment sich über einen Umfangswinkel von 30° erstreckt. Auch ergibt sich ein Vorteil daraus, dass eine Geberausformung einen Verwirbelungsabschnitt ausformt, so weiter bevorzugt dadurch, dass eine Geberausformung in Grundriss linear verlaufend ausgebildet ist und hierbei etwa sekantenförmig an dem scheibenförmigen Grundriss der Geberscheibe anschließt. Demzufolge ist auch die Fertigung der Geberscheibe vereinfacht, da diese durch Stanzen und anschließendem Hochkanten der Geberausformungen geformt werden kann. Die geradlinig linear verlaufenden Geberausformungen führen des Weiteren zu einer Lüfterwirkung, welche zur Reinigung der vorgesehenen und zu durchtretenden Gabellichtschranken dient. Behinderungen und Anschmutzungen der Gabellichtschranken werden zufolge dessen insbesondere bei hohen Drehzahlen unterbunden. Aufgrund der erzeugten Luftturbulenzen stellt sich sogar eine automatische Reinigung der Lichtschranke ein.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Reluktanzmotor in einer perspektivischen Zusammenbaudarstellung;
- Fig. 2: den Reluktanzmotor in einer perspektivischen Explosionsdarstel- lung;
- Fig. 3: den Rotor mit einer drehfest angeordneten Geberscheibe und einem gleichfalls drehfest angeordneten Lüfter in perspektivischer Einzeldarstellung;
- Fig. 4: den vergrößerten Schnitt gemäß der Linie IV-IV in Fig. 3;
- Fig. 5: die Draufsicht auf den Rotor mit Blick auf die Geberscheibe;

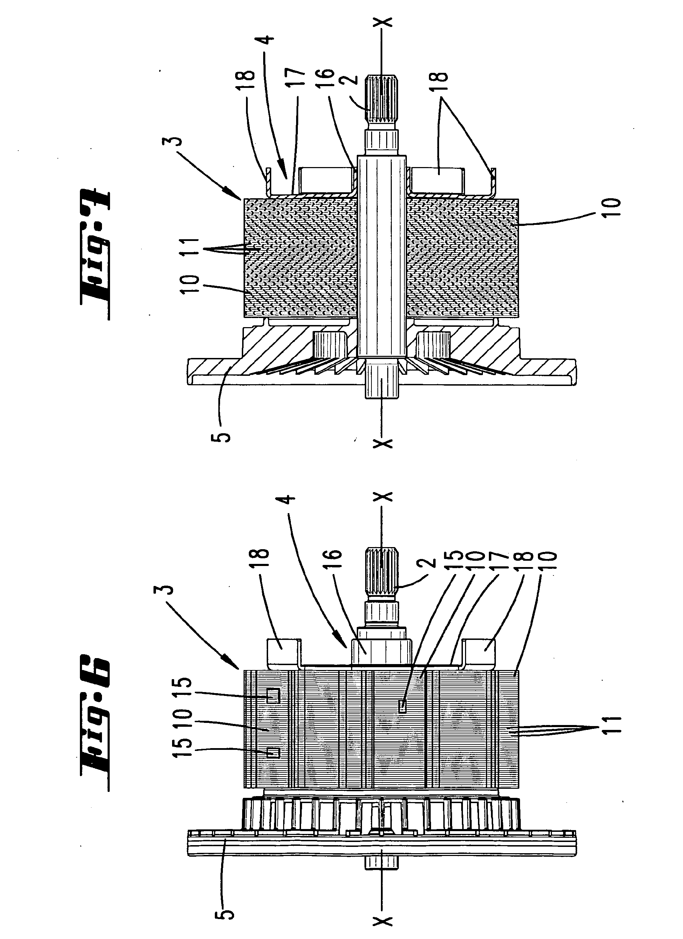

- Fig. 6: die Seitenansicht hierzu;
- Fig. 7: den Schnitt gemäß der Linie VII-VII in Fig. 5;
- Fig. 8: ein Rotorblech in Draufsicht;
- Fig. 9: die Herausvergrößerung des Bereichs IX in Fig. 8;
- Fig. 10: das Rotorblech in perspektivischer Darstellung;

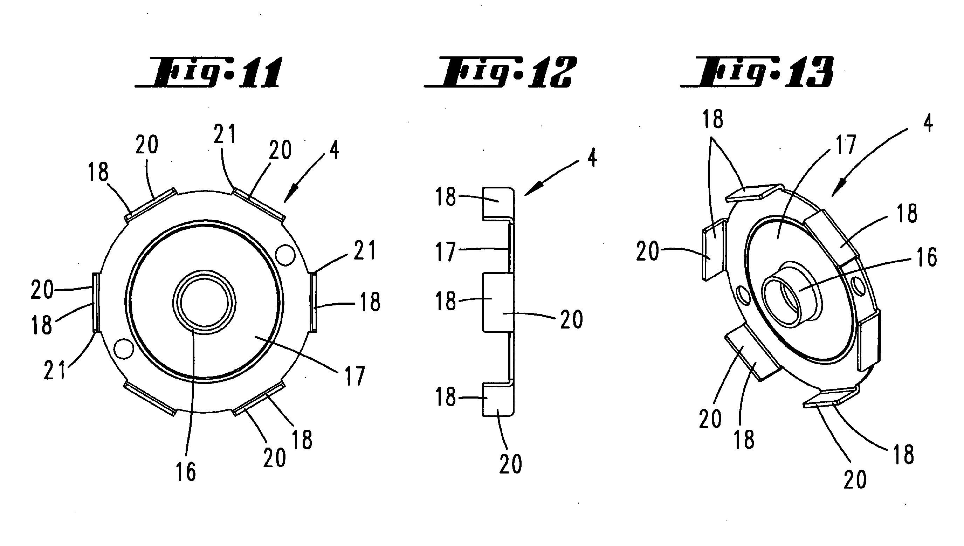

- Fig. 11: die Geberscheibe in einer Einzeldraufsicht;
- Fig. 12: die Seitenansicht der Geberscheibe;
- Fig. 13: eine perspektivische Darstellung der Geberscheibe.

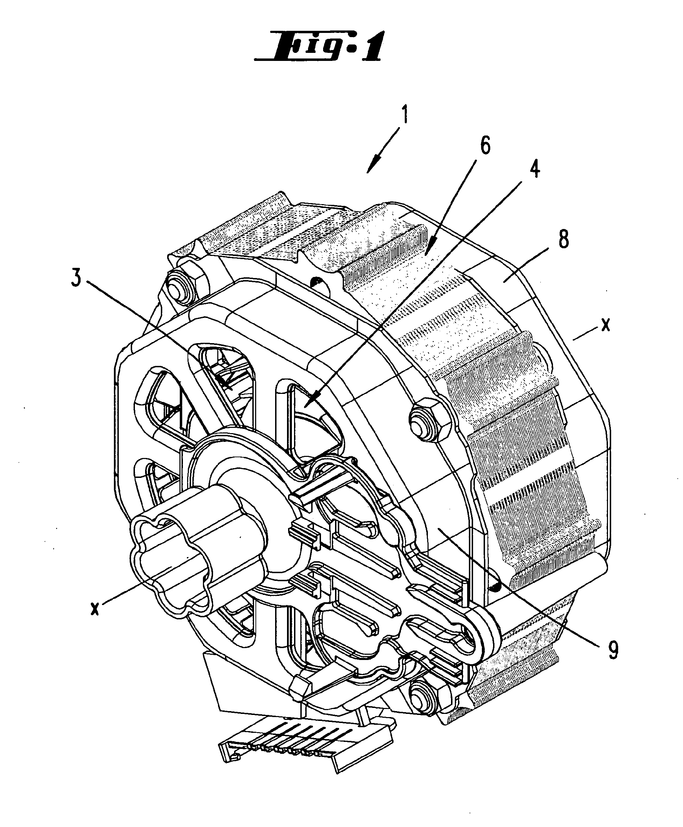

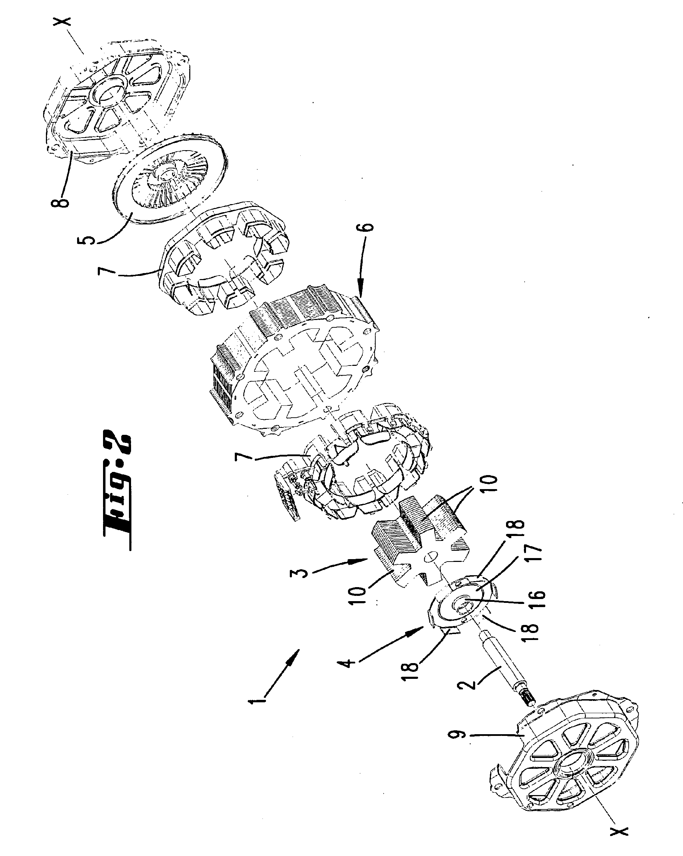

Dargestellt und beschrieben ist zunächst mit Bezug zu den Fig. 1 und 2 ein Reluktanzmotor 1, welcher im Wesentlichen besteht aus einem auf einen Rotorachskörper 2 drehfest aufsteckbaren Rotor 3, einer gleichfalls auf den Rotorachskörper 2 aufsteckbaren und drehfest mit dem Rotor 3 verbindbaren Geberscheibe 4 sowie einem auf der der Geberscheibe 4 gegenüberliegenden Seite des Rotors 3 drehfest mit diesem anordbaren Lüfter 5, einem Stator 6 mit einem zweiteiligen Statorabdeckkörper 7 zur Aufnahme von nicht dargestellten Statorspulen und zwei beidseitig des Stators 6 an diesem befestigbare, die Enden des Rotorachskörpers 2 lagernden Brücken 8, 9.

Der dargestellte Reluktanzmotor 1 ist ein sogenannter 8/6-Reluktanzmotor und weist somit einen Rotor 3 mit sechs Rotorsegmenten 10 und einen Stator 6 mit acht nicht näher dargestellten Statorspulen auf.

Die Rotorsegmente 10 sind winkelgleichmäßig um den Rotorgrundkörper verteilt und ragen radial ab, wobei der Rotor 3 aus einer Vielzahl von axial übereinander angeordneten, gleichen Rotorblechen 11 besteht. Jedes Rotorblech 11 ist bevorzugt ein Stanzteil und ist darüber hinaus mit einer einseitigen Backlack-Beschichtung versehen. Mittels dieser Beschichtung werden die übereinander angeordneten Rotorbleche 11 durch Hitzebeaufschlagung miteinander verklebt, zur Bildung des Rotors 3.

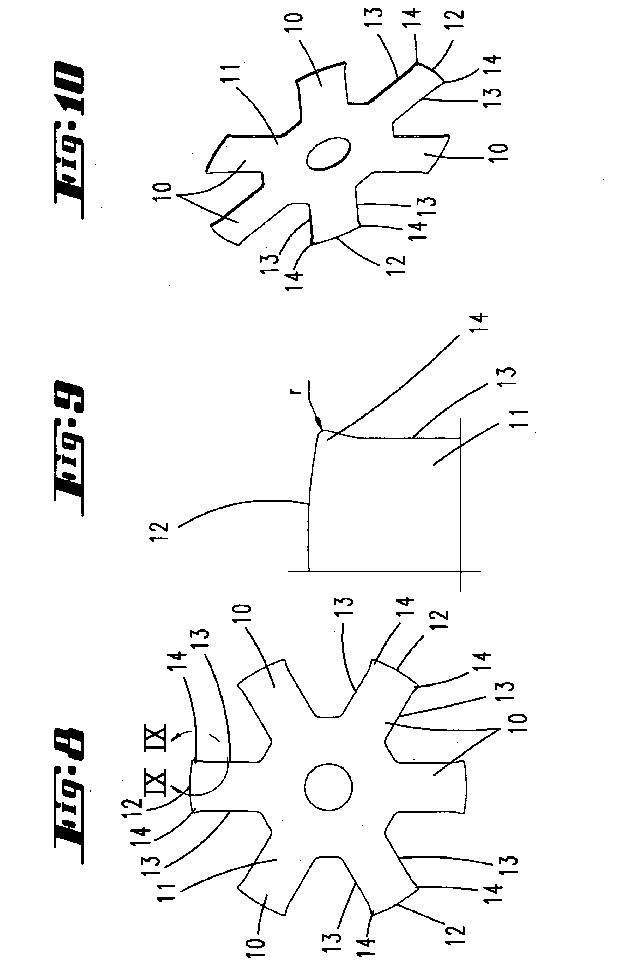

Jedes Rotorsegment 10 ist im Grundriss im Wesentlichen rechteckig geformt mit einer kreisabschnittförmigen Gestaltung der Stirnseite 12 und zwei parallel verlaufenden Flachseiten 13. Jedes Rotorsegment 10 geht in den Übergängen von den Flachseiten 13 in die Stirnseite 12 in eine Verbreiterung über, in welcher Verbreiterung der Übergang in die Stirnseite 12 abgerundet ist. Die Verrundung trägt das Bezugszeichen 14. Zufolge der endseitigen Verbreiterung des Rotorsegments 10 sind die Übergänge in Umfangsrichtung jeweils jenseits einer geradlinigen Verlängerung der Flachseiten 13 ausgebildet (vgl. insbesondere Vergrößerungsdarstellung in Fig. 9).

Der Radius r der Abrundung 14 beträgt in dem dargestellten Ausführungsbeispiel etwa 0,5 mm.

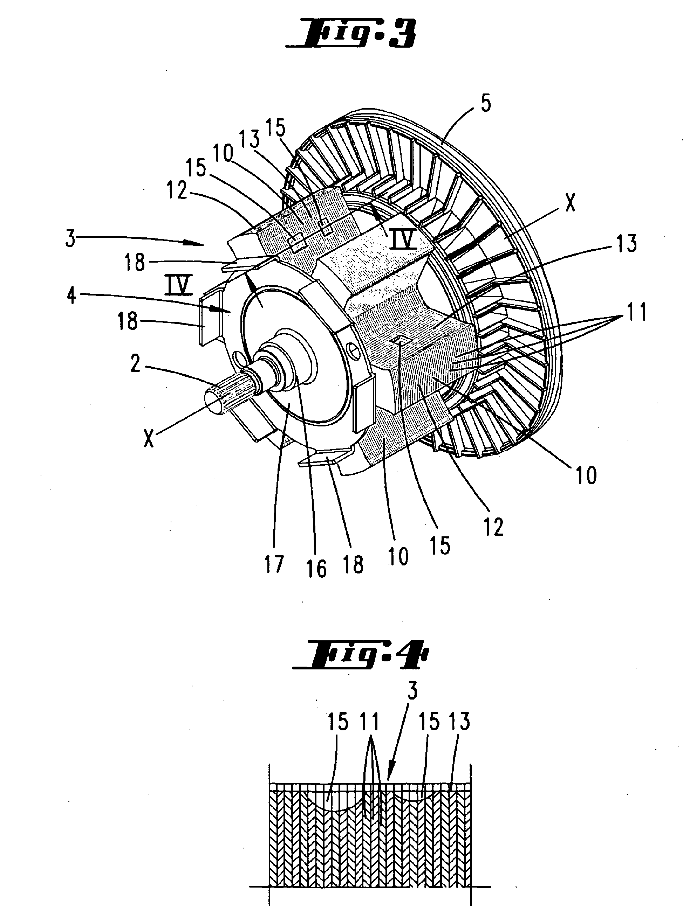

Zum Wuchten des Rotors 3 ist dieser im Bereich der Flachseiten 13 der Rotorsegmente 10 mit Ausfräsungen 15 in unterschiedlichem Ausmaß sowohl bezüglich der in Rotorachsrichtung gemessenen Länge als auch hinsichtlich der Tiefe versehen. Auch sind, wie in Fig. 3 zu erkennen, mehrere Ausfräsungen 15 im Bereich einer Flachseite 13 möglich.

Die drehfest mit dem Rotor 3 auf dem Rotorachskörper 2 befestigte Geberscheibe 4 übernimmt die Funktion einer Halteplatte für den aus einzelnen Rotorblechen 11 bestehenden Rotor 3 und dient somit zur Erhöhung der axialen Festigkeit des Rotors 3. Hierzu steht die Nabe 16 der Geberscheibe 4 gegenüber dem Scheibengrundkörper 17 vor, so dass beim Aufziehen auf den Rotorachskörper 2 eine Vorspannung im elastischen Bereich auf das Rotorpaket erreicht wird.

Auf der der Geberscheibe 4 abgewandten Seite des Rotors 3 ist der drehfest mit diesem angeordnete Lüfter 5 vorgesehen, welcher zusammen mit der Geberscheibe 4 das Rotorblechpaket fasst. Der Lüfter 5 ist hierzu auf einen gekerbten Abschnitt des Rotorachskörpers 2 aufgebracht.

Die Geberscheibe 4 ist durch Stanzen und anschließendem Hochkanten von Geberausformungen 18 gebildet, woraus resultiert, dass die Geberausformungen 18 im Grundriss linear verlaufend ausgebildet sind und in etwa sekantenartig dem Rand des Scheibengrundkörpers 17 zugeordnet sind.

Jede Geberausformung 18 erstreckt sich in einem Umfangswinkel von 30°. Demzufolge ist die zwischen zwei Geberausformungen 18 verbleibende Spaltbreite gleich einer Geberausformungsbreite, so dass eine symmetrische Geberscheibe 4 ausgeformt ist.

Zufolge dieser Ausgestaltung der Geberscheibe 4 werden bei einer Umdrehung des Rotors 3, 24 Impulse - bei Anordnung von zwei durch die Geberausformungen 18 zu durchtretenden Gabellichtschranken 19 - erzeugt. Es ergeben sich vier eindeutige Positionsinformationen zur Ansteuerung der vier Phasen des mit acht Statorwicklungen versehenen Stators 6.

Durch die geradlinig verlaufende Anordnung der Geberausformungen 18 dienen diese zugleich als Verwirbelungsabschnitte 20. Durch diese ist eine Lüfterwirkung erreicht, mittels welcher eine automatische Reinigung der Gabellichtschranken 19 erzielt wird.

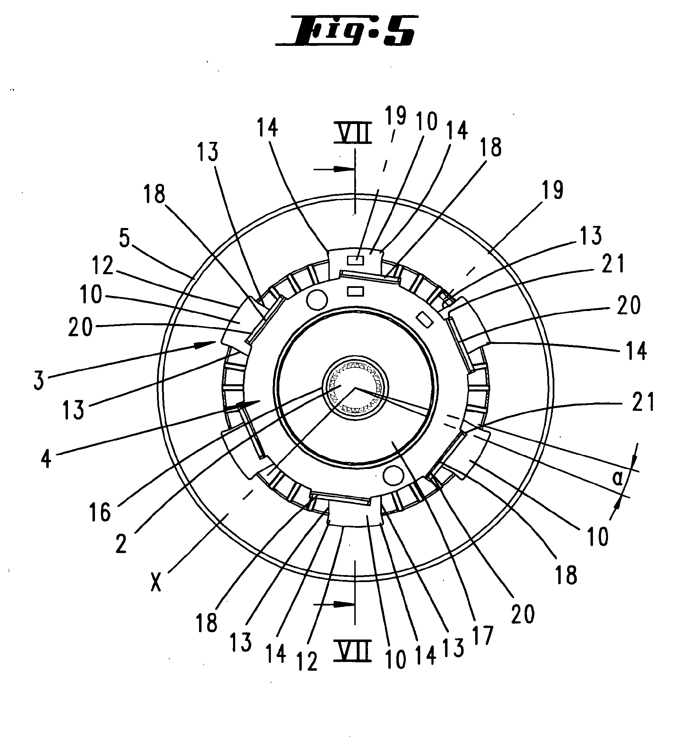

Die Zuordnung der Geberscheibe 4 zum Rotor 3 ist so gewählt, dass bei gleicher Anzahl von Geberausformungen 18 und Rotorsegmenten 10 jede Geberausformung 18 so ausgerichtet ist, dass eine Axialflanke 21 einer Geberausformung 18 bezüglich einer Flachseite 13 des zugeordneten Rotorsegments 10 einen Umfangsversatz von 7,5° aufweist (siehe Winkel Alpha in Fig. 5). Durch diesen Winkelversatz ist ein problemloser Betrieb des vierphasigen Reluktanzmotors 1 sowohl im Rechts- als auch im Linkslaufbetrieb ermöglicht.

## Patentansprüche

1. Reluktanzmotor (1) mit einem Rotor (3) und einem Stator (6), wobei der Rotor (3) Rotorsegmente (10) aufweist, die in freistehenden Bereichen im Wesentlichen rechteckig geformt sind mit einer stirnseitigen kreisabschnittförmigen Gestaltung, **dadurch gekennzeichnet, dass** selektiv auf einer oder mehreren Flachseiten (13) der Rotorsegmente (10) zum Wuchten des Rotors (3) Material entfernt ist, gegebenenfalls in unterschiedlichem Ausmaß.

2. Reluktanzmotor nach Anspruch 1, **dadurch gekennzeichnet, dass** eine Materialentfernung durch Ausfräsung erreicht ist.

3. Reluktanzmotor (1) nach einem der Ansprüche 1 oder 2, **dadurch gekennzeichnet, dass** der Rotor (3) aus einer Vielzahl von dünnen Blechen (11), die axial übereinander angeordnet sind, zusammengesetzt ist.

4. Reluktanzmotor nach Anspruch 3, **dadurch gekennzeichnet, dass** die Bleche (11) miteinander verklebt sind.

5. Reluktanzmotor nach Anspruch 4 oder Ansprüchen 3 und 4, **dadurch gekennzeichnet, dass** die Verklebung aufgrund einer Backlack-Beschichtung der Bleche (11) erreicht ist.

6. Reluktanzmotor (1) nach einem der Ansprüche 1 bis 5, **dadurch gekennzeichnet, dass** dem Rotor (3) eine Geberscheibe zugeordnet ist, dass jedem Rotorsegment (10) eine Geberausformung (18) zugeordnet ist, wobei jedoch jedenfalls eine Axialflanke (21) einer Geberausformung (18) bezüglich einer Flachseite (13) des zugeordneten Rotorsegmentes (10) einen Umfangsversatz von 7,5° aufweist.

7. Reluktanzmotor nach Anspruch 6, **dadurch gekennzeichnet, dass** eine Geberausformung (18) sich über einen Umfangswinkel von 30° erstreckt.

8. Reluktanzmotor nach einem der Ansprüche 6 oder 7, **dadurch gekennzeichnet, dass** eine Geberausformung (18) einen Verwirbelungsabschnitt (20) ausformt.

9. Reluktanzmotor nach einem der Ansprüche 6 bis 8, **dadurch gekennzeichnet, dass** eine Geberausformung (18) im Grundriss linear verlaufend ausgebildet ist.

## Claims

1. Reluctance motor (1) with a rotor (3) and a stator (6), the rotor (3) having rotor segments (10) which, in free-standing regions, are provided with a substantially rectangular form and, at the end edges, have the configuration of a segment of a circle, **characterized in that** material is selectively removed on one or more flat sides (13) of the rotor segments (10) to balance the rotor (3), if appropriate to different extents.

2. Reluctance motor according to Claim 1, **characterized in that** material removal is achieved by milling.

3. Reluctance motor (1) according to one of the claims 1 or 2, **characterized in that** the rotor (3) is made up of a multiplicity of thin laminations (11), which are disposed axially one on top of the other.

4. Reluctance motor according to Claim 3, **characterized in that** the laminations (11) are adhesively bonded to one another.

5. Reluctance motor according to Claim 4 or Claims 3 and 4, **characterized in that** the adhesive bonding is achieved on the basis of a baking varnish coating of the laminations (11).

6. Reluctance motor (1) according to one of the Claims 1 to 5, **characterized in that** a sensor disk (4) is also associated with the rotor (3), that a sensor shaping (18), is associated with each rotor segment (10), but at least an axial flank (21) of a sensor shaping (18) has a circumferential offset of 7.5° with respect to a flat side (13) of the associated rotor segment (10).

7. Reluctance motor according to Claim 6, **characterized in that** a sensor shaping (18) extends over a circumferential angle of 30°.

8. Reluctance motor according to one of the Claims 6 or 7, **characterized in that** a sensor shaping (18) forms a vortexing portion (20).

9. Reluctance motor according to one of the Claims 6 to 8, **characterized in that** a sensor shaping (18) is formed to extend linearly in outline.

## Revendications

1. Moteur à reluctance (1) avec un rotor (3) et un stator (6), le rotor (3) présentant des segments de rotor (10) qui sont formés dans des zones dégagées de manière essentiellement rectangulaire avec une conception en forme de segment de cercle côté avant, **caractérisé en ce que** de la matière est retirée de manière sélective sur un ou plusieurs côtés plats (13) des segments de rotor (10) pour équilibrer le rotor (3), éventuellement dans des proportions différentes.

2. Moteur à reluctance selon la revendication 1, **caractérisé en ce qu'**un retrait de matière est obtenu par fraisage.

3. Moteur à reluctance (1) selon l'une quelconque des revendications 1 ou 2, **caractérisé en ce que** le rotor (3) est composé d'une pluralité de tôles (11) minces qui sont disposées axialement les unes au-dessus des autres.

4. Moteur à reluctance selon la revendication 3, **caractérisé en ce que** les tôles (11) sont collées les unes aux autres.

5. Moteur à reluctance selon la revendication 4 ou les revendications 3 et 4, **caractérisé en ce que** le collage est obtenu en raison d'un revêtement de vernis de cuisson des tôles (11).

6. Moteur à reluctance (1) selon l'une quelconque des revendications 1 à 5, **caractérisé en ce qu'**au rotor (3) est associé un disque capteur, **en ce qu'**à chaque segment de rotor (10) est associé un modelage de capteur (18), un flanc axial (21) d'un modelage de capteur (18) présentant toutefois en tout cas par rapport à un côté plat (13) du segment de rotor (10) associé, un décalage périphérique de 7,5°.

7. Moteur à reluctance selon la revendication 6, **caractérisé en ce qu'**un modelage de capteur (18) s'étend sur un angle inscrit de 30°.

8. Moteur à reluctance selon l'une quelconque des revendications 6 ou 7, **caractérisé en ce qu'**un modelage de capteur (18) modèle une section de tourbillonnement (20).

9. Moteur à reluctance selon l'une quelconque des revendications 6 à 8, **caractérisé en ce qu'**un modelage de capteur (18) est réalisé s'étendant linéairement en projection horizontale.
